Europäisches Patentamt

European Patent Office

Office européen des brevets

(19)

(11) **EP 1 357 150 A1**

## (12) EUROPEAN PATENT APPLICATION

(43) Date of publication:
**29.10.2003 Bulletin 2003/44**

(21) Application number: **03252588.3**

(22) Date of filing: **24.04.2003**

(51) Int Cl.[7]: **C08L 21/00**, C08K 5/00, C08L 9/00, C08L 23/16, C08L 9/02

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **24.04.2002 US 375466 P**

(71) Applicant: **Materials Engineering Research Laboratory Limited**
**Hertford, Hertforshire SG13 7DG (GB)**

(72) Inventor: **Campion, Robert Paget**
**Hertfordshire SG12 8JP (GB)**

(74) Representative: **Whitaker, Iain Mark et al**
**Sommerville & Rushton**
**Business Link Building**
**45 Grosvenor Road**
**St. Albans, Hertfordshire AL1 3AW (GB)**

(54) **Rubber compounds cured at low temperatures**

(57) The present invention relates to elastomers, i. e. natural or synthetic rubbers, and also particularly to improved rubber compounds and an improved method of producing moulded cured elastomers.

An improved rubber compound is formed by combining: (i) a dry (not latex) rubber; (ii) a liquid polymer which is chemically compatible with or the same as the dry rubber; and (iii) one or more ultra-fast chemical accelerators.

This rubber compound can be cured very rapidly at temperatures of the order of 150°C and also at low temperatures of the order of 70°C, for example, being pliant and readily mouldable. Further benefits include improvements in physical properties such as shear strength.

EP 1 357 150 A1

**Description**

The present invention relates to elastomers, i.e. natural or synthetic rubbers, and also particularly to improved rubber compounds and an improved method of producing moulded cured elastomers.

Background to the Invention

It is well known and established that, to achieve the useful cured state, basic rubber polymers which exist in a viscous form, lying in between solids and liquids, are generally first mixed mechanically with other ingredients in the form of powders, resins or liquids to produce so-called rubber compounds. Some of the added ingredients are chemicals which can react to bring about the cured elastic state. These rubber compounds are then subjected to the curing (vulcanisation) process.

During the curing period, in one common process, compression moulding, the rubber compound is placed to an overfilled capacity within the constituent parts of a suitable mould shaped as a reflection of the eventual component being produced.

During the early stages of curing, the mould parts which encapsulate the rubber compound are subjected to heat and externally-applied hydrostatic pressure. The applied pressure causes the mould parts to move together until closed, thus producing rubber compound flow and consolidation of the rubber compound within, and expelling excess material. The rubber compound thus takes up the shape of the mould. The heat applied initially causes the rubber compound to soften to facilitate this process, and later causes the chemical crosslinking reactions which vulcanize the rubber compound to a useful elastic state to take place.

In other moulding processes, the rubber is extruded to a suitable continuous strip (extrusion moulding), or transferred or injected from one mould region to another shaped to form the product (transfer moulding and injection moulding, respectively). Again the process involves a mechanical shaping followed by curing. This invention applies to all forming and curing processes such as these or any others used for moulding rubbers. End use mouldings include the range from small components such as seals and gaiters through shoe rubbers, extruded profiles and tyre treads to hoses and flex elements, and to bridge bearings and other large scale civil engineering structures.

The added ingredients (additives) are incorporated into the rubber compounds according to recipes, or formulations, which have been developed through many years of improvement and optimisation to obtain the desired material properties for each of the many different usages of rubbers. The magnitudes of these properties are commonly used to specify the materials most suited for different applications.

It is by far the more common practice to cure the rubber compounds at a temperature in the approximate range of 120°C to 220°C, with the most common temperatures being 130°C to 185°C or thereabouts. The time required at these temperatures to reach completion of cure varies from approximately a very few minutes at the highest temperatures to several hours at the lowest temperatures, which are usually only used for curing very large articles. Occasionally a temperature as low as 100°C might be used, but the cure would then normally last for several days. Such low temperature long cures are normally only used in situations where the cure time does not matter, for example, curing a rubber lining around the inner surface of a storage tank used for containing liquids, etc. At the most common temperatures of 140°C to 150°C, a time reasonably required for cure would normally lie in the 20 minutes to 60 minutes range.

Summary of the Invention

The present invention provides a series of new rubber compounds that possess the attribute that they can be moulded and cured in such reasonable times as 20 to 60 minutes or less, or at most for a few hours only, at a cure temperature much below that normally used, such as 70°C, for example.

As a corollary to this, the new rubber compounds may alternatively be moulded and cured rapidly within only a few minutes at the commoner cure temperatures, e.g. 140°C to 150°C, that would normally have required a cure time of 20 minutes to 60 minutes. In one such example, curing has been achieved in only 1 to 2 minutes at 150°C.

These attributes have been achieved with new rubber compounds containing chemical accelerators termed ultra-fast with respect to their accelerating activity. These accelerators already exist, but are not normally used in any significant quantity in rubber compounds of the types under consideration - termed "dry rubbers" when compared with the following. Rather, they are generally utilised for curing latex products, where a latex is an emulsion of tiny rubber or other polymer particles kept dispersed in water by means of a suitable emulsifying agent.

One reason that ultra-fast accelerators are not generally used for rapid curing of dry rubbers is that, often, their usage or presence prevents the initial moulding stage from occurring as follows:

(a) at relatively-low temperatures, for example 70°C, when for example these accelerators could bring about a full cure in 20 minutes to 60 minutes, a normal rubber compound is usually too viscous or stiff to be moulded under normal moulding pressures.

(b) at normal temperatures such as 150°C, the rate of cure is so fast that the premature onset of cure causes the compound viscosity to increase equally rapidly, again before moulding is complete.

The present invention combines the inclusion of two classes of ingredient in the rubber compound recipe/ formulation in addition to the dry rubber:

(i) a liquid polymer which is chemically compatible with or the same as the base rubber polymer; and
(ii) one or more ultra-fast accelerators as discussed above.

The addition of the liquid polymer as under (i) removes the problems outlined as (a) and (b), because

A at low temperatures the initial overall viscosity of the compound is reduced by presence of the liquid polymer; thus moulding is possible at these low temperatures, and cure in a reasonable time can be performed.

B at normal temperatures such as 150°C the inherent very low viscosity now initially present means that rapid cure onset merely returns the magnitude of this property to the level displayed by normal rubber compounds at this temperature; thus moulding is again possible and rapid cures can be performed at normal temperatures such as 150°C.

In addition, these compounds have been observed to possess some improved property magnitudes in comparison with equivalent normal rubber compounds, for instance, for tear resistance, quantified as tear strength of the cured rubber formed from the rubber compound.

In the present invention the addition to the base elastomer/ dry rubber of both a compatible liquid polymer and one or more ultra-fast accelerators allows the two types of improved cure procedures to be carried out, and even with improvements in properties such as tear strength.

In this way, as an example, high-duty natural rubber sulphur-cured compounds have been developed associated with reduced thermal energy requirements during manufacturing, and hence lower environmental costs.

The compatible polymer for a given base elastomer/ dry rubber may broadly be defined with reference to the magnitude of the solubility parameter ($\delta$) of the base rubber polymer and of the compatible polymer, whereof they should be within one $\delta$ unit, i.e. 1 $(cal/cm^3)^{1/2}$, and preferably 0.83 $(cal/cm^3)^{1/2}$, of each other. The calculation leading to the latter difference value is shown in the article of reference: R.P.Campion, Journal of Natural Rubber Research, Volume 2(2), page 67 (June 1987). With liquid polymers of lower molecular weights, analogous calculations will give a slightly bigger difference value. For example, the solubility parameter for natural rubber as determined by one solubility parameter measurement technique may be 8.6 $(cal/cm^3)^{1/2}$ whereas, by the same technique (and same conditions) of measurement, for liquid polybutene it may be 8.1 $(cal/cm^3)^{1/2}$. The two are well within 1 $(cal/cm^3)^{1/2}$ of each other and, therefore, liquid polybutene is within the scope of the above definition of a compatible polymer for use with natural rubber. One of the many known techniques that may be used for measuring solubility parameters is solubility parameter spectroscopy. Table I shows some typical solubility parameter values.

TABLE I

| Relevant typical solubility parameter $\delta$ values | | |
|---|---|---|
| Elastomer/ liquid polymer | $\delta$ from reference* below, $(cal/cm^3)^{0.5}$ | $\delta$ from solubility parameter spectroscopy**, $(cal/cm^3)^{0.5}$ |
| NR | 8.1 | 8.6 |
| SBR (23% styrene content) | 8.4 | |
| cis BR | 8.4 | |
| EP rubber | 8.0 | 8.3 |
| NBR (34% acrylonitrile content) | *ca* 10 | 10.3 |

*reference C.J.Sheehan & A.L.Bisio, Rubber Chemistry and Technology, Vol. 39(1), page 149, (Feb. 1966)*

** *the solubility parameter spectroscopy technique* (SPS) is *described in "Engineering with Rubber", edited by A.N.Gent, published by HanserGardner (USA)/Carl Hanser Verlag (Germany), Chapter 7, ($2^{nd}$ edition, 2001).*
*N.B. It should be noted that $\delta$ values from SPS tend to be 0.1 to 0.5 $(cal/cm^3)^{0.5}$ higher than the reference values.*

TABLE I   (continued)

| Relevant typical solubility parameter δ values | | |
|---|---|---|
| Elastomer/ liquid polymer | δ from reference* below, $(cal/cm^3)^{0.5}$ | δ from solubility parameter spectroscopy**, $(cal/cm^3)^{0.5}$ |
| HNBR (38% acrylonitrile content) | | 9.6 |
| CR | 8.9 | 9.3 |
| FKM | | 10.9 |
| liquid polybutene | 8.0 | 8.1 |
| liquid depolymerised NR | Residues from depolymerisation agents cause increase estimated as *ca* 0.3 over NR value | |
| liquid NBR (26% acrylonitrile content) | 9.4 | |
| liquid BR | Assumed same as for cis BR, 8.4 | |
| liquid EPDM | Assumed same as for EP rubber, 8.0 - 8.3 | |

* *reference C.J.Sheehan & A.L.Bisio, Rubber Chemistry and Technology, Vol. 39(1), page 149, (Feb. 1966)*

** *the solubility parameter spectroscopy technique* (SPS) is *described in "Engineering with Rubber", edited by A.N.Gent, published by HanserGardner (USA)/Carl Hanser Verlag (Germany), Chapter 7, (2nd edition, 2001).*
*N.B. It should be noted that δ values from SPS tend to be 0.1 to 0.5 $(cal/cm^3)^{0.5}$ higher than the reference values.*

By way of more specific identification of suitable compatible polymers the following are held to be useful. Where the primary/base elastomer is Natural rubber (NR), Cis polyisoprene (IR), Styrene butadiene (SBR), Cis polybutadiene (BR), or Butyl rubber (IIR) (and variants chlorobutyl (CIIIR), or bromobutyl (BrIIR) rubber, the compatible polymer that is blended with it is suitably selected from the group comprising: liquid polybutene (PB); liquid Natural Rubber; liquid cis polyisoprene; liquid cis polybutadiene; liquid styrene butadiene; or any suitable combination of these.

A suitable chelating polymer could be used instead of the suggested compatible polymers but is generally far less effective. A suitable chelating polymer may be one of the chelating polymers sold under the brand name Intec by ITPS systems Inc., Ohio, USA . A suitable chelating polymer is a chelating polymer that is chemically compatible with the base elastomer to render it pliant. This is its main reason for selection herein, although its presence may also have some effect on curing characteristics.

Where the primary/base elastomer is Ethylene propylene diene monomer (EPDM), the compatible polymer that is blended into it is suitably selected from the group consisting of: liquid EPDM; liquid polybutene (PB); liquid cis polyisoprene; or any suitable combination of these. A suitable chelating polymer could again be used instead of these compatible polymers but is not preferred.

Where the primary/base elastomer is Nitrile rubber (NBR), the compatible polymer that is blended into it is suitably selected from the group consisting of: liquid NBR, liquid XNBR, or any suitable combination of these. A suitable chelating polymer could again be used instead of the suggested compatible polymers but is not preferred.

Where the primary/base elastomer is Carboxylated nitrile (XNBR), the compatible polymer that is blended into it is suitably selected from the group consisting of: liquid NBR or liquid XNBR or both of these. A suitable chelating polymer could again be used instead of the compatible polymer but is not preferred.

Where the primary/base elastomer is Hydrogenated nitrile rubber (HNBR), the compatible polymer that is blended into it is suitably selected from the group consisting of: liquid NBR, liquid XNBR or both of these. A suitable chelating polymer could again be used instead of the compatible polymer but is not preferred.

Where the primary/base elastomer is Hydrogenated carboxylated nitrile (HXNBR), the compatible polymer that is blended into it is suitably selected from the group consisting of: liquid NBR, liquid XNBR, or any suitable combination of these.

Where the primary/base elastomer is Polychloroprene (CR), the compatible polymer that is blended into it is suitably selected from the group consisting of liquid NBR or liquid CR or both of these. A suitable chelating polymer could again be used instead of the compatible polymer but is not preferred.

Where the primary/base elastomer is Fluoroelastomer (FKM) of peroxide curable classes, the compatible polymer that is blended into it is suitably an FKM of low viscosity, eg 10 Mooney units. A suitable chelating polymer could again be used instead of the compatible polymer but is not preferred.

The appropriate curing process for the above combinations of base elastomer and compatible polymer is suitably a sulphur system for all but the cases where the base elastomer is a peroxide-curable fluorelastomer. A peroxide system should be used for the latter and may also be used for all rubbers except the cases where the base elastomer is polyisobutylene, butyl rubber (including chloro- or bromo-butyl rubber) or polyepichlorohydrin rubber.

For the peroxide curing system, the curing system preferably comprises cumyl hydroperoxide with manganese versalate being the accelerator, including the case where both of these added ingredients are first incorporated into separate batches of the rubber compound, and these batches are subsequently mixed.

As for the ultra fast accelerator generally, this is suitably an accelerator that accelerates cure of an optimally-formulated natural rubber compound to a $t_{90}$ or $t_{95}$ of about 2 minutes or less at 150°C or pro-rata at higher or lower temperatures according to the approximate principle of multiplying reaction rate, as quantified by the reciprocal of the $t_{95}$, by roughly 1.5 to 2 for every 10°C elevation of the temperature. On this basis, at 70°C the $t_{95}$ of the cure reaction would therefore be up to 512 minutes. The $t_{95}$ of the cure reaction is the time taken for the cure to be 95% completed. For another rubber type, an ultra fast accelerator might cause a different increase in reaction rate for every 10°C temperature rise. For an SBR rubber compound, the factor might be only 1.3 to 1.4 instead of 1.5 to 2 as for NR compounds. The more accurate Arrhenius approach for comparing cure times with cure temperature is outlined herein later.

Suitable ultra fast chemical accelerators which may be used in sulphur-based curing systems, alone or in combination with each other or other accelerators, are:

(i) 2,2' - Dithiodi (ethylammonium) - bis (dibenzyldithiocarbamate) (for convenience termed DTDEA/DBeCX herein);
(ii) Dipentamethylene thiuram tetra/hexasulphide (for convenience termed DPTT herein);
(iii) Amine-activated zinc dibutyl dithiocarbamate (for convenience termed ZDBCX herein);
(iv) Zinc isopropyl xanthate (commonly ZIX in the Rubber Industry); and
(v) Tetramethylthiuram disulfide (commonly TMTD in the Rubber Industry).

Accelerator (i) is marketed by a UK rubber chemicals supplier. These accelerators (ii) to (v) are marketed by rubber chemical suppliers generally. Tetramethylthiuram disulfide, a well-established accelerator produced by several manufacturers, would only be used in conjunction with other accelerators such as (i) to (iv) above for the present purposes.

The specific accelerator used may alternatively comprise any other chemical accelerator which those skilled in the art would know possessed similar abilities to accelerate rubber compound vulcanisation.

Normally, and especially for sulphur-based cures, we have found that combinations of two ultra-fast accelerators work well.

Preferred combinations include ZDBCX and ZIX or DTDEA/DBeCX and DPTT. Other formulations could include instead of DPTT: caprolactam disulfide (manufactured in Germany)); or 4, 4'-dithiodimorpholine (manufactured generally). Hence further combinations are: DTDEA/DBeCX and caprolactam disulfide or DTDEA/DBeCX and 4, 4'-dithiodimorpholine.

Other formulations could include di isopropyl xanthogen polysulfide (DIXP) instead of DTDEA/DBeCX.

Hence further combinations are: DIXP and caprolactam disulfide; DIXP and 4, 4'-dithiodimorpholine; or DIXP and DPTT.

Other chemicals which are accelerators at normal high curing temperatures such as benzothiazyl disulphide (MBTS), N-cyclohexyl-2-benzothiazole sulphenamide (CBS), tetramethyl thiuram monosulphide (TMTM) or diphenyl guanidine (DPG) can be present in these recipes as auxiliary accelerators which may act as secondary accelerators or act as retarders (cure-delay additives) for processable low temperature curing (PLTC) systems. Sulphur is also present, at low or high values.

The preferred level of loading of sulphur in the rubber compound is suitably up to about of the order of 5 parts per hundred (weight for weight) where the 100 parts comprises the base elastomer and the compatible polymer combined.

The preferred level of loading of the or each accelerator in the rubber compound is of the order of up to 3 parts per hundred (weight for weight ) where the 100 parts comprises the base elastomer and the compatible polymer combined.

The preferred ratio of base elastomer to compatible polymer (weight for weight) is suitably in the range of about 60 : 40 to 85 :15 and most preferably about 75 : 25.

The ultra fast accelerators are suitably from the classes of chemical accelerators for curing rubbers that are: dithiocarbamates including activated dithiocarbamates; xanthogens, including xanthates; thioureas; and thiurams. Members of other classes of accelerators and sulphur-donors including di- or polysulphides might also be present in a supporting or secondary role.

Description of Preferred Embodiments

Processable low temperature curing (PLTC) formulations described initially hereinafter were originally developed specifically for the end-use of the manufacture of flexelements - large bonded rubber/metal components with complex profiles, which support huge loads and accommodate considerable deformations on tension leg platforms during offshore oil production. They are, of course, useful in a range of different structures most notably in civil engineering for structures that are laminated. Besides giving considerable energy savings during curing, reduced shrinkage during the cooling period following their lower manufacturing temperatures will improve dimensional features throughout the finished product.

*Natural rubber PLTC compounds*

Good magnitudes of properties relevant to this end application have been achieved, including tensile properties, tear strength, air-aging resistance, rubber-to-steel bonding and crack growth fatigue. In some of these, the property levels of the high-temperature-cured natural rubber compound currently used to manufacture flexelements have been surpassed by the PLTC level. In addition, creep tests in compression have led to the prediction of a 9% change under flexelement service conditions over 90 years.

During the initial stages of the curing process, flexelements were moulded at 30°C below their target eventual curing temperature of 70°C, i.e. the moulding temperature was 40°C.

To bring about moulding at 40°C, the compound was first rendered more pliant than normal by incorporating liquid polybutenes (PB) in natural rubber (NR) formulations. Ultra-fast accelerators were introduced into the formulation to bring about the vulcanisation at 70°C. The first PB chosen was of molecular weight 950, being Napvis®10 (this name later being changed to Indopol®H100 by the makers), supplied by British Petroleum plc; this is sometimes termed PB 950 hereinafter.

Flow rate testing was carried out at the target moulding temperature of 40°C._ In order to simulate production-mixing conditions, a series of masterbatch compound samples were worked in a two-roll mill at ambient temperature for twenty minutes prior to the test. Only one of the masterbatches at 40°C satisfied the viscosity requirement of the control compound at its higher moulding temperature with a slightly faster flow rate (lower viscosity). The formulation for this masterbatch is shown in Table II.

TABLE II

| NR/Polybutene Masterbatch Formulation | |
|---|---|
| **Masterbatch** | **1** |
| Natural rubber, SMR CV60 | 75 |
| PB 950* (Indopol® H100) | 25 |
| Zinc oxide | 5 |
| Stearic acid | 2 |
| Carbon black, HAF (ASTM N330) | 45 |
| Antioxidant/antiozonant, 6PPD | 3 |
| Antiozonant wax | 2 |

*\* polybutene (liquid, molecular weight 950)*

For the majority of the compounds, the curatives were added to the masterbatch on a cool mill in order to minimize scorch aspects. However, there were a few compounds where this procedure was not employed and a note is made to that effect at the time. Ultra fast accelerators ZDBCX and ZIX and established accelerator MBTS (originally intended here to act as an inhibitor) were initially investigated as an ev-type combination. This gave ev compound with a cure time ($t_{95}$ at 70°C) of 88 minutes but a scorch time ($t_2$ at 40°C) of only 100 minutes (Compound A in Table III). Based upon the result from this formulation, a series of further compounds were investigated (Table III) in which i) the MBTS level was increased, and ii) the MBTS was respectively substituted by Vulkalent® (Inhibitor) E and Vulkalent® (Inhibitor) G (ex Bayer). The curatives were normally incorporated at fairly low temperatures, below the melting points of the inhibitors. Thus, it was deemed worthwhile to see whether an improvement in cure time and scorch-delay characteristics would be achieved by the act of melting one of the new inhibitors during mixing, to improve the quality of its dispersion. Inhibitor E was first mill-mixed into Masterbatch A at 120°C, which is 10°C above its melting point (Compound D). The mix was then cooled down to room temperature and the remaining curatives added. All the compounds had curometry tests conducted at 40°C, 70°C and 100°C (see Table III for $t_2$ data).

TABLE III

| First NR/Polybutene PLTC Formulations and Curemeter Data | | | | | |
|---|---|---|---|---|---|
| **Compound** | **A** | **B** | **C** | **D\*** | **E** |
| Masterbatch 1 | 157 | 157 | 157 | 157 | 157 |
| Sulphur | 1.3 | 1.3 | 1.3 | 1.3 | 1.3 |
| MBTS | 0.2 | 0.3 | - | - | - |
| Inhibitor Vulkalent® E | - | - | 0.2 | 0.2* | - |
| Inhibitor Vulkalent® G | - | - | - | - | 0.2 |
| ZDBCX | 2.0 | 2.0 | 2.0 | 2.0 | 2.0 |
| ZIX | 2.0 | 2.0 | 2.0 | 2.0 | 2.0 |
| $t_2$, (40°C) min | 100 | 90.8 | 88.6 | 219 | 115 |
| $t_2$, (70°C) min | 9.3 | 12.8 | 11.8 | 14.7 | 11.4 |
| $t_2$, (100°C) min | 2.2 | 3.4 | 2.3 | 2.7 | 2.1 |
| $t_2$, (150°C) min | 0.27 | - | - | - | - |
| $t_{95}$, (70°C) min | 88.0 | 68.6 | 67 | 62 | 54 |
| $t_{95}$, (100°C) min | 12.2 | - | - | - | - |
| $t_{95}$, (150°C) min | 1.46 | - | - | - | - |
| • *retarder melted by milling at appropriate high temperature* | | | | | |

Cure Curve of NR PLTC Compound A at 150°C

Compound A was also tested at 150°C on the curemeter, with cure being very rapid, as indicated graphically in the accompanying figure. The associated $t_2$ and $t_{95}$ data are also included in Table III.
The curometry results for Compounds B to E are compared below with those of Compound A:

*Compound B*

The 50% increase in the MBTS level not only reduced the cure time ($t_{95}$ at 70°C) by over 20% but also the scorch time by almost 10%. It appears that the MBTS has no inhibiting characteristics at the temperatures of interest here (although such characteristics were indicated by the $t_2$ values at the higher temperatures).

*Compound C*

The MBTS was substituted by Inhibitor E, but the relevant changes in both cure time and scorch time were insignificantly different from those seen for Compound B.

*Compound D*

This has the same formulation as Compound C, but inhibitor E was melted, which resulted in the scorch time being greatly increased to 219 minutes; furthermore the cure time was reduced to 62 minutes.

*Compound E*

Inhibitor G was used instead of MBTS and produced a large reduction in cure time to 54 minutes, with the scorch time also showing an increase to 115 minutes.
Of these five PLTC compounds, Compound D (melted Inhibitor E) has the best combination of cure time and shelf life with regard to use in manufacturing flexelements. Further investigations have also been carried out using greatly-increased loadings of melted inhibitors E and G - see Compounds F and G respectively in Table IV.

TABLE IV

| Further NR/Polybutene PLTC Formulations and Curemeter Data | | |
|---|---|---|
| **Compound** | **F** | **G** |
| Masterbatch 1 | 157 | 157 |
| Sulphur | 1.3 | 1.3 |
| Inhibitor Vulkalent® E | 2.0* | - |
| Inhibitor Vulkalent® G | - | 2.0* |
| ZDBCX | 2.0 | 2.0 |
| ZIX | 2.0 | 2.0 |
| $t_2$, (40°C) min | 950 | 351 |
| $t_2$, (70°C) min | 25.6 | 20.5 |
| $t_2$, (100°C) min | 3.3 | 4.0 |
| $t_{95}$, (70°C) min | >>180+ | >>180+ |

*\* retarders melted by milling at appropriate high temperatures*

*+ values applying at maximum time limit of curemeter trace; marching moduli*

Great improvements in scorch times are seen for both Compounds F and G, especially for the former compound, but in both cases the cure times associated with marching moduli are unacceptably long.
The ev development was showing great steps towards very long scorch times but the cure times were being adversely affected. Thus, a fresh approach was adopted with the use of a higher sulphur content curative system (Compound H - see Table V, which also includes relevant curemeter data, including torque data).

TABLE V

| Formulation and Curemeter Data for another NR PLTC Compound "H" | |
|---|---|
| **Compound** | **H** |
| Masterbatch 1 | 157 |
| Sulphur | 2.25 |
| MBTS | 0.2 |
| ZDBCX | 0.5 |

TABLE V   (continued)

| Formulation and Curemeter Data for another NR PLTC Compound "H" | |
|---|---|
| **Compound** | **H** |
| ZIX | 0.5 |
| $t_2$, (40°C) min | 578 |
| $t_2$, (70°C) min | 26.0 |
| $t_2$, (100°C) min | 4.9 |
| $t_{95}$, (70°C) min | 107 |
| $t_{max}$, (70°C) min | 228 |

While the cure time at 70°C is almost twice that for Compound D, it is still at an acceptable level and with a scorch time (40°C $t_2$ scorch) over twice as good as that for Compound D, as also indicated in Figure 1. Hence Compounds D and H possess recipes of two different types both relatively well suited to the end application. One (Compound H) accentuates shelf life/ scorch time features; although not to the ideal manufacturer's "Target Line" level, it was considered that the life attained led to a workable manufacturing scenario. On the other hand, Compound D would produce fully-cured material in a reasonable cure time at 70°C, providing a rapid through-put of uncured compound was ensured.

The mechanical properties of Natural Rubber (NR) compound H after a cure of 107 minutes at 70°C given in Table VI as a comparison with a normally-cured control NR compound show that good properties have been obtained after curing at the lower temperature.

TABLE VI

| Mechanical Properties of NR Compound H and Control | | | | | |
|---|---|---|---|---|---|
| | Modulus at 100% Strain (M100) MPa | Tensile Strength MPa | Elongation at Break % | Trouser Tear Strength N/mm | Hardness IRHD |
| Compound H | 2.7 | 21.2 | 516 | 37.8 | 53 |
| Control (15min cure*) | 3.2 | 22.1 | 443 | 21.5 | 67 |
| Control (4hr cure*) | 3.5 | 19.2 | 369 | 8.9 | 66 |

*at its normal high curing temperature*

Table VII shows another combination of accelerators which will bring about curing of the NR/polybutene masterbatch described in Table I at low temperatures such as 70°C.

TABLE VII

| Formulation and Curemeter Data for another NR PLTC Compound "I" | |
|---|---|
| **Compound** | **I** |
| Masterbatch 1 | 157 |
| Sulphur | 0.5 |
| DPTT PM75 | 3.33 |
| DTDEA/DBeCX PM50 | 2.0 |
| $t_2$, (40°C) min | 3350 |
| $t_2$, (70°C) min | 109 |
| $t_2$, (100°C) min | 10.0 |
| $t_{95}$, (70°C) min | 314 |

TABLE VII (continued)

| Formulation and Curemeter Data for another NR PLTC Compound "I" | |
| --- | --- |
| **Compound** | **I** |
| $t_{max}$, (70°C) min | 424 |

The descriptions above indicate that, within the overall innovative aspects as claimed herein, approaches involving changes in formulations as might be introduced by any rubber compounder or others skilled on the art of developing conventional recipes for elastomeric compounds to enhance the magnitude of one property for a particular product, perhaps at the expense of another property, apply equally to PLTC compounds. The present claims are not restricted to the recipes shown herein, but also apply to all recipes with the ingredients disclosed when used in the PLTC approach.

*Curing with other elastomers*

Styrene butadiene copolymer (SBR) and high-cis polybutadiene (cis BR) Table VIII shows formulations for four SBR PLTC elastomers (three using liquid natural rubber as the liquid polymer) plus two SBR control compounds which are cured at the common temperature of 150°C.

TABLE VIII

| Formulations for various SBR PLTC and control compounds | | | | | | |
| --- | --- | --- | --- | --- | --- | --- |
| **Compound** | **4005/3** | **4005/4** | **4005/5** | **4005/6** | **4005/7** | **4007/2** |
| SBR 1500 | 100 | 75 | 75 | 75 | 75 | 100 |
| DPR 40® liquid NR | - | 25 | 25 | 25 | 25 | - |
| Paraffinic oil* | 5 | - | - | - | - | 5 |
| Intec TG® process aid | - | - | - | - | - | 5 |
| Zinc oxide | 3 | 3 | 3 | 3 | 3 | 3 |
| Stearic acid | 1 | 1 | 1 | 1 | 1 | 1 |
| Santoflex® 13 | 3 | 3 | 3 | 3 | 3 | 3 |
| Antiozonant wax | 2 | 2 | 2 | 2 | 2 | 2 |
| N234 carbon black | 15 | 15 | 15 | 15 | 15 | 15 |
| N550 carbon black | 35 | 35 | 35 | 35 | 35 | 35 |
| Sulphur | 1.75 | 1.75 | 1.0 | 2.0 | 0.75 | 2.0 |
| CBS | 1.0 | 1.0 | - | -- | - | - |
| ZDBCX® | - | - | 2.0 | 0.6 | - | 4.0 |
| ZIX | - | - | 2.0 | 0.6 | - | 4.0 |
| MBTS | - | - | 0.3 | 0.2 | - | - |
| DPTT PM75 | - | - | - | - | 2.5 | - |
| DTDEA/DBeCX PM50 | - | - | - | - | 1.0 | - |

*Structpar 2280®*

The mechanical properties of the PLTC compounds cured in a reasonable time at 90°C approach those of the control compounds and represent elastomers that can be used for engineering purposes. Including Compound 4007/2 in these comments shows that using a chelating agent process aid instead of a compatible liquid polymer still leads to acceptable properties unless a high degree of resistance to tearing is required.

TABLE IX

| Mechanical properties of cured SBR compounds from Table VIII recipes | | | | | | |
|---|---|---|---|---|---|---|
| Compound | Control SBR, 4005/3 | Control SBR, 4005/4 | 4005/5 | 4005/6 | 4005/7 | 4007/2 |
| Cure temperature, °C | 150 | 150 | 90 | 90 | 90 | 90 |
| Cure time, minutes | 30 | 22 | 110 | 200 | 100 | 60 |
| Hardness, IRHD | 59 | 54 | 52 | 62 | 64 | 64 |
| Modulus M100, MPa | 2.0 | 1.6 | 1.6 | 2.4 | 3.0 | 3.5 |
| Tensile strength, MPa | 18.5 | 14.4 | 8.7 | 10.6 | 9.9 | 10.3 |
| Elongation at break, % | 593 | 604 | 483 | 406 | 292 | 240 |
| Trouser tear strength, N/mm | 12.7 | 13.0 | 14.3 | 11.3 | 7.9 | 4.3 |

For Compound 4007/2, test pieces were cured both for a reasonable time at 90°C and for a short time at 150°C, the times being based on curemeter $t_{95}$ values at each temperature. Property values measured were very similar for both cure procedures.

TABLE X

| Cure temperature/time combination effects on the mechanical properties of one SBR PLTC formulation from Table VIII | | |
|---|---|---|
| Compound | 4007/2* | 4007/2 |
| Cure temperature, °C | 90 | 150 |
| Cure time, minutes | 60 | 5 |
| Hardness, IRHD | 64 | 64 |
| Modulus M100, MPa | 3.5 | 3.6 |
| Tensile strength, MPa | 10.3 | 10.4 |
| Elongation at break, % | 240 | 224 |
| Trouser tear strength, N/mm | 4.3 | 5.6 |

* repeated from Table IX

Further SBR PLTC recipes are possible. Four more SBR PLTC formulations using a liquid nitrile polymer instead of liquid NR are shown in Table XI.

TABLE XI

| Formulations for other SBR PLTC Compounds | | | | |
|---|---|---|---|---|
| Compound | 4004/15 | 4004/16 | 4006/1 | 4006/2 |
| SBR 1502 | 75 | 75 | 75 | 75 |
| Nipol® 1312lv (liquid NBR) | 25 | 25 | 25 | 25 |
| Stearic acid | 2 | 2 | 2 | 2 |
| Santoflex® 13 | 3 | 3 | 3 | 3 |
| Antiozonant wax | 2 | 2 | 2 | 2 |
| N550 carbon black | 40 | 40 | 40 | 40 |
| Sulphur | 2.5 | 2.5 | 1.0 | 2.0 |
| ZDBCX | 2.0 | 2.0 | 2.4 | 0.6 |

TABLE XI (continued)

| Formulations for other SBR PLTC Compounds | | | | |
|---|---|---|---|---|
| **Compound** | **4004/15** | **4004/16** | **4006/1** | **4006/2** |
| ZIX | 2.0 | 2.0 | 2.4 | 0.6 |
| MBTS | - | 1.0 | 0.3 | 0.2 |

When performing curometry, these compounds displayed a "marching modulus". This situation occurs when cure never quite completes, or completes in a reasonable time; here, we wait until the rate is slow enough on an arbitrary basis, the times for $t_{95}$ etc then being calculated based on this choice. A marching modulus rate of less than 1% as applies here (Table XII) is considered well slow enough.

TABLE XII

| Curemeter Results on MDR 2000 for SBR Compounds 4004/15 & /16 | | | | | |
|---|---|---|---|---|---|
| Compound | $t_2$ min | $t_{95}$ min | $t_{max}$ min | $M_{H,}$ dNm | Marching modulus rate %/hour |
| 4004/15 | | | | | |
| 80°C | 7.6 | 89.1 | 217 | 10.7 | 0.15 |
| 90°C | 4.3 | 61.6 | 201 | 10.6 | 0.24 |
| 4004/16 | | | | | |
| 80°C | 5.4 | 84.8[+] | >240 | 10.7* | 0.41 |
| 90°C | 3.1 | 62.5[+] | >240 | 12.2* | 0.91 |

\* torque values at 240 minutes

[+] values based upon a $t_{max}$ value of 240 minutes

For each compound, the individual $t_{95}$ time values can be related for cures at different temperatures. The Arrhenius equation, well-known in chemical kinetics aspects of physical chemistry, compares the rate of chemical reaction with a function of temperature. For curing rubber, from a curemeter curve, the reciprocal time to reach a particular feature (normally $t_{95}$) is taken as the rate. A convenient modification of the Arrhenius equation is:

$$\ln \frac{1}{(t_{95})} = const - \frac{Ea}{RT} \qquad (1)$$

where T is cure temperature in absolute degrees (degrees kelvin), R is the Gas Constant (1.9872 cal/deg/mole) and the constant Ea is the activation energy. From the form of this equation, plotting reciprocal absolute cure temperature versus the natural logarithm of reciprocal $t_{95}$ results in a straight line. Hence curemeter tests conducted at more than one temperature (ideally with a minimum of three different temperatures) leads the attainment of such a straight line after which $t_{95}$ values for cures of the same compound can be read from this line for any desired curing temperature. In this way, the $t_{95}$ values for many temperatures applying to the rubber compounds associated with Table XI have been obtained. These values are shown in Table XIII.

TABLE XIII

| Curemeter $t_{95}$ values (minutes) of SBR PLTC Compounds 4004/15 and 4004/16 at various temperatures based upon Arrhenius projections | | | | | | | | |
|---|---|---|---|---|---|---|---|---|
| Cure temperature | 80°C | 90°C | 100°C | 110°C | 120°C | 130°C | 140°C | 150°C |
| 4004/15 $t_{95}$ | 89 | 62 | 43 | 31 | 23 | 17 | 13 | 10 |
| 4004/16 $t_{95}$ | 85 | 63 | 47 | 36 | 27 | 21 | 17 | 14 |

The mechanical properties of these SBR PLTC elastomers are compared in Table XIV with the control SBR values already given in Table IX. Once again, acceptable elastomer properties are obtained; it should be noted that the better tear resistance was found with the SBR PLTC compounds including liquid natural rubber liquid polymer (Table IX).

TABLE XIV

| Mechanical properties of the cured SBR compounds from Table XI | | | | | | |
|---|---|---|---|---|---|---|
| Compound | Control SBR, 4005/3 | Control SBR, 4005/4 | 4004/15 | 4004/16 | 4006/1 | 4006/2 |
| Cure temperature, °C | 150 | 150 | 90 | 90 | 90 | 90 |
| Cure time, minutes | 30 | 22 | 60 | 60 | 120 | 65 |
| Hardness, IRHD | 59 | 54 | 55 | 57 | 54 | 52 |
| Modulus M100, MPa | 2.0 | 1.6 | 4.2 | 4.5 | 1.7 | 1.7 |
| Tensile strength, MPa | 18.5 | 14.4 | 8.1 | 9.9 | 9.0 | 8.8 |
| Elongation at break, % | 593 | 604 | 798 | 950 | 477 | 487 |
| Trouser tear strength, N/mm | 12.7 | 13.0 | 4.2 | 5.3 | 7.6 | 9.5 |
| *The control data from Table IX are repeated for easy reference* | | | | | | |

Table XV shows some PLTC formulations for cis BR, using two liquid polymers.

TABLE XV

| Formulations for various cis BR PLTC and control compounds | | | | |
|---|---|---|---|---|
| Compound | 2002/4 | 2002/6 | 2002/8 | 2002/10 |
| cis BR | 100 | 75 | 75 | 85 |
| R45 HTLO liquid poly BD | - | 25 | - | - |
| Indopol H100® liquid polybutene | - | - | 25 | 15 |
| Paraffinic oil* | 15 | - | - | - |
| Zinc oxide | 3 | 3 | 3 | 3 |
| Stearic acid | 1.5 | 1.5 | 1.5 | 1.5 |
| Santoflex® 13 | 3 | 3 | 3 | 3 |
| Antiozonant wax | 2 | 2 | 2 | 2 |
| N330 carbon black | 55 | 55 | 55 | 55 |
| Sulphur | 1.75 | 2.0 | 2.0 | 2.0 |
| CBS** | 1.0 | - | - | -- |
| ZDBCX | - | 0.6 | 0.6 | 0.5 |
| ZIX | - | 0.6 | 0.6 | 0.5 |
| MBTS | - | 0.2 | 0.2 | 0.1 |

*\* Structpar 2280®*

*\*\* N-cyclohexyl-2-benzothiazole*

Table XVI shows the mechanical property values for the compounds formulated in Table XV. The PLTC elastomers have cured to give properties suitable for lower-grade applications, but inferior to those of the cis BR control elastomer.

TABLE XVI

| Compound | Control cis BR, 2002/4 | 2002/6 | 2002/8 | 2002/10 |
|---|---|---|---|---|
| Mechanical properties of cured cis BR PLTC and control compounds | | | | |
| Cure temperature, °C | 150 | 90 | 90 | 90 |
| Cure time, minutes | 19 | 120 | 90 | 100 |
| Hardness, IRHD | 58 | 67 | 68 | 67 |
| Modulus M100, MPa | 1.3 | 2.3 | 3.0 | 2.3 |
| Tensile strength, MPa | 10.5 | 5.3 | 6.4 | 5.4 |
| Elongation at break, % | 565 | 232 | 194 | 223 |
| Trouser tear strength, N/mm | 18.2 | 6.5 | 7.8 | 9.4 |

It is commonplace to blend elastomers such as SBR and cis BR. An illustration of one PLTC formulation for such a blend is shown in Table XVII.

The property magnitudes of the blend compound cured at 90°C are given in Table XVIII. These are broadly intermediate between those from equivalent formulations containing the individual rubbers only, with an acceptable tear strength but only moderate tensile property levels being reached.

TABLE XVII

| Compound | 2002/11 |
|---|---|
| Formulation for a 50/50 SBR/cis BR PLTC compound blend | |
| SBR 1500 | 37.5 |
| DPR 40® liquid NR | 12.5 |
| cis BR | 37.5 |
| R45 HTLO liquid poly BD | 12.5 |
| Zinc oxide | 3 |
| Stearic acid | 1.25 |
| Santoflex 13 | 3 |
| Antiozonant wax | 2 |
| N234 carbon black | 7.5 |
| N330 carbon black | 27.5 |
| N550 carbon black | 17.5 |
| Sulphur | 1.5 |
| ZDBCX | 0.6 |
| ZIX | 0.6 |
| MBTS | 0.25 |

TABLE XVIII

| Compound | 2002/11 |
|---|---|
| Mechanical properties of cured SBR/cis BR PLTC blend compound | |
| Cure temperature, °C | 90 |
| Cure time, minutes | 240 |

TABLE XVIII (continued)

| Mechanical properties of cured SBR/cis BR PLTC blend compound | |
|---|---|
| Compound | 2002/11 |
| Hardness, IRHD | 61 |
| Modulus M100, MPa | 1.7 |
| Tensile strength, MPa | 5.6 |
| Elongation at break, % | 320 |
| Trouser tear strength, N/mm | 13.3 |

Ethylene propylene terpolymer (EPDM)

Some PLTC formulations according to both sulphur- and peroxide-based curing systems are shown in Table XIX.

TABLE XIX

| Formulations for various EPDM PLTC compounds (both sulphur-based and peroxide cured) | | | | |
|---|---|---|---|---|
| Compound | 6004/2 | 6005/2 | 6006/3 | 6007/97 |
| Vistalon 7500® EPDM | 75 | - | 75 | - |
| Vistalon 2504® EPDM | - | - | - | 75 |
| Keltan® 4703 EPDM | - | 37.5 | - | - |
| Keltan® 314 EPDM | - | 37.5 | - | - |
| Trilene 65® liquid EPDM | 25 | 25 | 25 | 25 |
| Indopol H100® liquid polybutene | - | 5 | - | - |
| Indopol H7® liquid polybutene* | - | 5 | - | 5 |
| Zinc oxide | 5 | 5 | 5 | 5 |
| Stearic acid | 1 | 1 | 1 | 1 |
| Magnesium oxide | 2 | 2 | 2 | 2 |
| Carbon black N550 | 50 | 40 | 50 | 40 |
| Sulphur | 2.0 | 2.0 | - | - |
| RZDBCX | 3.0 | 3.0 | - | - |
| ZIX | 3.0 | 3.0 | - | - |
| MBTS | 0.5 | 0.5 | - | - |
| China clay | - | - | 40 | 34 |
| Manganese versalate (12%) | - | - | 5 | 7 |
| TMPTMA 70 | - | - | 12 | 8.6 |

* Polybutene of very low viscosity (approaching the "watery" level). NB For compounds 6006/3 and 6007/97 which employ a PLTC peroxide curing system, the manganese versalate and Luperox CU80® peroxide (80% cumyl hydroperoxide on an inert particulate filler) should be mixed separately into different portions of the compound, which are subsequently blended, to avoid an excessive exothermic chemical reaction between them.

TABLE XIX   (continued)

| Formulations for various EPDM PLTC compounds (both sulphur-based and peroxide cured) | | | | |
|---|---|---|---|---|
| Compound | 6004/2 | 6005/2 | 6006/3 | 6007/97 |
| Luperox® CU80 | - | - | 15 | 10 |

The curemeter profile for PLTC compound 6007/97 is shown herewith, and summarised in Table XX.

TABLE XX

| Curemeter Results on MDR 2000 for EPDM PLTC Compound 6007/97 | | | | | |
|---|---|---|---|---|---|
| Test | $t_2$ min | $t_{max}$ min | $M_H^+$, dNm | Torque at 20 mins, dNm | Torque at 10 mins, dNm* |
| 6007/97 | 0.57 | 30 | 13.4 | 13.1 | 12.5 (95%) |

Table XXI gives the property levels for the EPDM PLTC compounds from the recipes of Table XIX. Both sulphur- and peroxide-based systems have produced cured rubbers at 90°C in reasonable cure times (the peroxide system having the faster cure), but the tensile properties of the sulphur systems are somewhat the better.

TABLE XXI

| Mechanical properties of cured EPDM PLTC compounds | | | | |
|---|---|---|---|---|
| Compound | 6004/2 | 6005/2 | 6006/3 | 6007/97 |
| Cure temperature, °C | 90 | 90 | 90 | 90 |
| Cure time, minutes | 120 | 120 | 40 | 10 |
| Hardness, IRHD | 65 | 54 | 68 | 63 |
| Modulus M100, MPa | 3.0 | 1.7 | 3.1 | 3.1 |
| Tensile strength, MPa | 15.6 | 13.5 | 4.7 | 4.8 |
| Elongation at break, % | 455 | 635 | 174 | 255 |
| Trouser tear, N/mm | 5.1 | 6.6 | 5.1 | 4.2 |

Acrylonitrile butadiene copolymer ("nitrile rubber", NBR) and "Hydrogenated nitrile rubber", HNBR)

As illustrations, Table XXII shows one PLTC formulation (sulphur-based systems) each for these two related elastomer classes.

TABLE XXII

| Formulations for one NBR and one HNBR PLTC compound | | |
|---|---|---|
| Ingredient | 7030/1 | 7033/7 |
| Krynac® 3435NBR | 75 | - |
| Zetpol® 2010 HNBR | - | 75 |
| Nipol® 1312LV | 25 | 25 |
| Zinc oxide | 5 | 5 |
| Stearic acid | 1 | 0.4 |
| Carbon black, N330 | 40 | - |
| Carbon black, N550 | - | 40 |
| Carbon black (other) | - | 75 |
| Santoflex 13® | 3 | 1.1 |
| Flectol pastilles® | 2 | 2.2 |
| Antioxidant wax | 2 | - |
| Sulphur | 3.0 | 3.0 |
| MBTS | 0.5 | 2.5 |
| ZDBCX | 1.0 | - |
| ZIX | 1.0 | - |
| DTDEA/DBeCX | - | 2.5 |
| TMTD | - | 2.0 |

The mechanical property values, compared with results from a proprietary conventionally-cured NBR, are shown in Table XXIII. Acceptable elastomer property magnitudes are again achieved by the PLTC elastomers, even if not always matching control values. The HNBR tear strength value is high.

TABLE XXIII

| Mechanical properties of cured NBR and HNBR PLTC elastomers | | | |
|---|---|---|---|
| Compound | NBR Control * | 7030/1 | 7033/1 |
| Cure temperature, °C | 149 | 100 | 90 |
| Cure time, minutes | 67 | 60 | 150 |
| Hardness, IRHD | 61 | 66 | 79 |
| Modulus M100, MPa | 2.5 | 2.8 | 4.6 |
| Tensile strength, MPa | 23.3 | 14.0 | 7.0 |
| Elongation at break, % | 447 | 378 | 316 |
| Trouser tear, N/mm | 7.7 | 6.7 | 35.1 |

* proprietary recipe

Polychloroprene (CR)

Two of the possible PLTC formulations for CR are shown in Table XXIV, with a control. The ones illustrated have sulphur-based cure systems.

TABLE XXIV

| Formulations for two preliminary CR compounds | | | |
|---|---|---|---|
| Compound | CR control | 4005/3 | 4005/4 |
| Neoprene WRT® CR | 100 | 75 | 75 |
| Nipol®1312 liquid nitrile polymer | - | 25 | 25 |
| Zinc oxide | 5 | 5 | 5 |
| Stearic acid | 1 | 1 | 1 |
| Maglite D® | - | 5 | 5 |
| Octamine® | 1 | 1 | 1 |
| Permalux® | 1 | - | - |
| LCM® | 4 | - | - |
| Carbon black N330 | 35 | 35 | 35 |
| Sulphur | 0.5 | 0.5 | 3.0 |
| DTDEA/DBeCX | - | 2.0 | 2.0 |
| DPTT | - | 2.5 | 2.5 |
| TMTM | 0.5 | - | - |
| DPG | 0.5 | - | - |

The mechanical property values of these CR elastomers are given in Table XXV. Acceptable elastomer property magnitudes are shown by the CR PLTC elastomers.

TABLE XXV

| Mechanical properties of preliminary cured CR compounds | | | |
|---|---|---|---|
| Compound | Control CR | 3000/2 | 3000/3 |
| Cure temperature, °C | 150 | 90 | 90 |
| Cure time, minutes | 40 | 240 | 180 |
| Hardness, IRHD | 65 | 52 | 48 |
| Modulus M100, MPa | 3.3 | 1.6 | 1.5 |
| Tensile strength, MPa | 27.2 | 6.7 | 6.3 |
| Elongation at break, % | 423 | 452 | 573 |
| Trouser tear, N/mm | Not measured | 9.2 | 9.9 |

Fluoroelastomer (FKM)
FKM cannot be cured by sulphur-based systems. Some FKM elastomers can be cured by a peroxide system. The PLTC claims herein for FKM elastomers are restricted to peroxide systems. An illustration of one simple preliminary FKM PLTC formulation is given in Table XXVI.

TABLE XXVI

| Formulations for FKM LTC compound | |
|---|---|
| Ingredient | 1007/11 |
| Viton GF® FKM | 70 |
| Viton GBL-200® FKM | 30 |

TABLE XXVI (continued)

| Formulations for FKM LTC compound | |
|---|---|
| Ingredient | 1007/11 |
| Zinc oxide | 3 |
| Diak #7® | 3 |
| Carbon black N990 | 30 |
| Carnauba wax® | 1 |
| TMPTMA 70 | 12 |
| China clay | 40 |
| Manganese versalate | 5 |
| Luperox CU80® | 15 |
| NB As with any PLTC peroxide curing system, the manganese versalate and Luperox CU80® peroxide should be mixed separately into different portions of the compound, which are subsequently blended, to avoid an excessive exothermic chemical reaction between them. | |

TABLE XXVII

| Mechanical properties of cured FKM PLTC compound | | | | |
|---|---|---|---|---|
| Compound | Control FKM* | 1007/11 | | |
| Cure temperature, °C | 180 | 100 | | |
| Cure time, minutes | 4 | 10 | 10 + 12 hours** | 10 + 24 hours** |
| Modulus M100, MPa | 6.9 | 3.2 | - | - |
| Tensile strength, MPa | 13.7 | 2.6 | 5.2 | 9.1 |
| Elongation at break***, % | 204 | 127 | 59 | 17 |
| Trouser tear strength, N/mm | 5.0 | 12.3 | 8.2 | 3.0 |
| Hardness, IRHD | 78 | 79 | 80 | 76 |

*proprietary recipe; received postcure 20 hours at 220°C*

** post cure at 100°C*

*** reduced due to delamination of testpieces during testing.*

The mechanical property values obtained for this FKM PLTC elastomer plus a proprietary control FKM compound are shown in Table XXVII. An FKM PLTC elastomer exhibiting properties at a level allowing engineering usage is indicated. However the following comment is also a relevant factor.

It is commonplace for manufacturing FKM and some other fluorine-containing elastomers to post-cure products (removed from the mould used for the earlier normal cure) to maximise properties. After de-moulding the component product from its curing mould, post-curing entails placing the component (usually together with many other similarly-cured components) in an oven at a temperature usually higher than its curing temperature, typically for a several hours. Hence final property levels are achieved after this post-curing process.

The control values shown herein were obtained from test pieces that had been post-cured for 20 hours at 220°C, as recommended by the FKM manufacturer.

The minimum requirement of the initial combined moulding and curing process is to achieve a sufficient magnitude of mechanical properties such that the component can be de-moulded without damage. This is the case with the FKM PLTC compound 1007/11 after cure but before post-cure (second column in Table XXVII). The adjacent right-hand columns show the further effects of two stages of post-curing; broadly, tensile strength values have developed at the expense of tear strength. It is considered this pattern would also apply for similar PLTC formulations of this type. It is also considered that a less-simple recipe containing further processing aids would lead to a significant increase in elongation at break values, as the delamination observed should not then apply.

Analogous comments also apply to other elastomers which for some component products have post-curing processes applied to their manufacture, for instance with NBR, HNBR, CR and EPDM elastomers. The PLTC versions of these materials could also benefit by appropriate post-curing procedures.

GLOSSARY OF MAIN ACRONYMS

| | |
|---|---|
| PLTC | processable low temperature curingcis BR high-cis polybutadiene |
| EPDM | ethylene-propylene diene monomer |
| FKM | fluoroelastomer |
| HNBR | hydrogenated nitrile rubber |
| NBR | ("nitrile rubber"), acrylonitrile butadiene copolymer |
| NR | natural rubber |
| CR | polychloroprene |
| SBR | styrene butadiene copolymer |
| HAF | "high abrasion furnace" carbon black particulate reinforcing filler |
| Luperox CU80 | cumyl hydroperoxide (Atofina) |
| M100 | modulus at 100% tensile extension (unit strain) |
| IRHD | international rubber hardness degrees |
| $t_2$ | for MDR: time to 2 dNm rise on a curemeter torque |
| $t_{90}$ | time to 90% of maximum torque rise on a curemeter, i.e. cure is 90% complete |
| $t_{95}$ | time to 95% of maximum torque rise on a curemeter |

**Claims**

1. A rubber compound formed by combining: (i) a dry (not latex) rubber; (ii) a liquid polymer which is chemically compatible with or the same as the dry rubber; and (iii) one or more ultra-fast chemical accelerators.

2. A rubber compound as claimed in claim 1, wherein the liquid polymer is the same as the dry rubber

3. A rubber compound as claimed in claim 1, wherein the liquid polymer is not the same as the dry rubber but compatible with it, having a solubility parameter ($\delta$) that is within one $\delta$ unit, i.e. 1 $(cal/cm^3)^{1/2}$, of the solubility parameter of the dry rubber.

4. A rubber compound as claimed in claim 3, wherein the dry rubber is selected from the group consisting of Natural rubber (NR), Cis polyisoprene (IR), Styrene butadiene (SBR), Cis polybutadiene (BR), Butyl rubber (IIR), chlorobutyl rubber (CIIIR) and bromobutyl rubber (BrIIR), and the compatible liquid polymer that is blended with it is selected from the group consisting of liquid polybutene (PB), liquid Natural Rubber, liquid cis polyisoprene, liquid cis polybutadiene , liquid styrene butadiene and any suitable combination of these liquid polymers.

5. A rubber compound as claimed in claim 1, wherein the dry rubber is Ethylene propylene diene monomer (EPDM) and the compatible polymer that is blended into it is selected from the group consisting of: liquid EPDM; liquid polybutene (PB); and liquid cis polyisoprene, or any suitable combination of these.

6. A rubber compound as claimed in claim 1, wherein the dry rubber is Nitrile rubber (NBR), Carboxylated nitrile (XNBR), Hydrogenated nitrile rubber (HNBR), Hydrogenated carboxylated nitrile rubber (HXNBR) and the compatible polymer that is blended into it is one more selected from the group consisting of liquid NBR and liquid XNBR.

7. A rubber compound as claimed in claim 1, wherein the dry rubber is Polychloroprene (CR) and the compatible polymer that is blended into it is one or more selected from the group consisting of liquid NBR and liquid CR.

8. A rubber compound as claimed in claim 1, wherein the dry rubber is Fluoroelastomer (FKM) of peroxide curable class and the compatible polymer that is blended into it is FKM of low viscosity.

9. A rubber compound as claimed in any preceding claim, wherein the ultra fast accelerator is an accelerator that accelerates cure of natural rubber to a $t_{90}$ or $t_{95}$ of about 2 minutes at 150°C.

10. A rubber compound as claimed in claim 1, wherein the ultra fast accelerator is selected from the group consisting of the classes of chemical accelerators for curing rubbers : dithiocarbamates; activated dithiocarbamates; xanthogens ; xanthates; thioureas; and thiurams.

11. A rubber compound as claimed in claim 1, wherein for use in sulphur-based curing systems the ultra fast accelerator comprises one or more accelerators selected from the group consisting of:

    (i) 2,2' - Dithiodi (ethylammonium) - bis (dibenzyldithiocarbamate);
    (ii) Dipentamethylene thiuram tetra/hexasulphide;
    (iii) Amine-activated zinc dibutyl dithiocarbamate; and
    (iv) Zinc isopropyl xanthate.

12. A rubber compound as claimed in claim 11, comprising a combination of accelerators selected from the group consisting of: Amine-activated zinc dibutyl dithiocarbamate and Zinc isopropyl xanthate; and 2,2' - dithiodi (ethylammonium) - bis (dibenzyldithiocarbamate) and dipentamethylene thiuram tetra/hexa-sulphide.

13. A rubber compound as claimed in claim 1, wherein the ultra-fast accelerator comprises caprolactam disulfide , 4, 4'-dithiodimorpholine or diisopropyl xanthogen polysulfide.

14. A rubber compound as claimed in any preceding claim, wherein the level of loading of the or each accelerator in the rubber compound is of the order of up to 3 parts per hundred (weight for weight ) where the 100 parts comprises the dry rubber and the compatible polymer combined.

15. A rubber compound as claimed in any preceding claim, wherein the ratio of dry rubber to compatible liquid polymer (weight for weight) is in the range of about 60 : 40 to 85 :15.

16. A rubber compound as claimed in claim 1, not being a peroxide-curable fluoroelastomer, further comprising sulphur for curing the rubber compound.

17. A rubber compound as claimed in claim 16, wherein the level of loading of sulphur in the rubber compound is up to of the order of 5 parts per hundred (weight for weight) where the 100 parts comprises the dry rubber and the compatible polymer combined.

18. A rubber compound as claimed in claim 1, wherein the dry rubber is not polyisobutylene, butyl rubber (including chloro- or bromo-butyl rubber) or polyepichlorohydrin rubber and further comprises peroxide for curing the rubber compound.

19. A rubber compound as claimed in claim 18, wherein the dry rubber is a peroxide-curable fluoroelastomer.

20. A moulded cured rubber formed from a rubber compound, the rubber compound being as claimed in any preceding claim.

**European Patent Office**

**EUROPEAN SEARCH REPORT**

Application Number

EP 03 25 2588

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2 984 644 A (WHEAT ROBERT C) 16 May 1961 (1961-05-16) <br><br> * column 5, line 29 - line 57 * <br> * example 4 * <br> --- | 1,3,4,9, 10,14, 16,17,20 | C08L21/00 C08K5/00 C08L9/00 C08L23/16 C08L9/02 |
| X | EP 1 186 631 A (JSR CORP) 13 March 2002 (2002-03-13) <br><br> * page 3, line 38 - line 48 * <br> * page 8, line 11 - line 49 * <br> * page 7, line 39 - page 8, line 4 * <br> * table 1 * <br> * claims 1,7,8,10 * <br> --- | 1-3,5, 9-11, 14-18,20 | |
| X | US 4 654 404 A (NAKAGAWA TSUYOSHI ET AL) 31 March 1987 (1987-03-31) <br><br> * column 3, line 19 - line 64 * <br> * column 4, line 5 - line 22 * <br> * example 2 * <br> * table 3 * <br> * example 14; table 5 * <br> * claims 1-8 * <br> --- | 1-3,6,9, 10, 14-17,20 | |
| X | PATENT ABSTRACTS OF JAPAN vol. 013, no. 049 (C-565), 3 February 1989 (1989-02-03) & JP 63 245449 A (DENKI KAGAKU KOGYO KK;OTHERS: 02), 12 October 1988 (1988-10-12) * abstract * <br><br> ----- | 1-3,7, 15,20 | TECHNICAL FIELDS SEARCHED (Int.Cl.7) <br><br> C08L C08K |

The present search report has been drawn up for all claims

| Place of search | Date of completion of the search | Examiner |
|---|---|---|
| THE HAGUE | 23 July 2003 | Denis, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**ANNEX TO THE EUROPEAN SEARCH REPORT
ON EUROPEAN PATENT APPLICATION NO.**

EP 03 25 2588

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2003

| Patent document cited in search report | | Publication date | Patent family member(s) | | Publication date |
|---|---|---|---|---|---|
| US 2984644 | A | 16-05-1961 | NONE | | |
| EP 1186631 | A | 13-03-2002 | JP | 2002080662 A | 19-03-2002 |
| | | | EP | 1186631 A1 | 13-03-2002 |
| | | | US | 2002058759 A1 | 16-05-2002 |
| US 4654404 | A | 31-03-1987 | JP | 1855886 C | 07-07-1994 |
| | | | JP | 5072410 B | 12-10-1993 |
| | | | JP | 61126151 A | 13-06-1986 |
| | | | CA | 1277065 C | 27-11-1990 |
| | | | DE | 3541069 A1 | 12-06-1986 |
| | | | FR | 2573433 A1 | 23-05-1986 |
| | | | GB | 2168058 A ,B | 11-06-1986 |
| JP 63245449 | A | 12-10-1988 | NONE | | |

EPO FORM P0459